# EUROPEAN PATENT SPECIFICATION

(11) **EP 1 100 318 B1**
(45) Date of publication and mention of the grant of the patent: **04.02.2004**
(21) Application number: 00927972.0
(22) Date of filing: 10.05.2000
(51) Int. Cl.: A01K 1/01

(54) **AN UNMANNED VEHICLE FOR DISPLACING MANURE**
UNBEMANNTES FAHRZEUG ZUM VERSCHIEBEN VON MIST
VEHICLE TELEGUIDE POUR DEPLACEMENT DE FUMIER

(30) Priority: 25.05.1999 NL 1012143
(43) Date of publication of application: 23.05.2001
(60) Divisional application: 03077928.4
(73) Proprietor: Lely Enterprises AG, 6300 ZUG (CH)
(72) Inventor: VAN DEN BERG, Karel, NL-2971 BR Bleskensgraaf (NL)
(74) Representative: Corten, Maurice Jean F.M.
(86) International application number: PCT/NL2000/000314
(87) International publication number: WO 2000/070938

(56) References cited:
- EP-A- 0 402 764
- EP-A- 0 943 235
- WO-A-97/31524
- US-A- 2 966 256
- US-A- 4 854 005
- US-A- 5 309 592
- US-A- 5 444 893

## Description

The invention relates to an unmanned vehicle according to the preamble of claim 1.

Such an unmanned vehicle is known from US-A-5,309,592.

The invention aims at providing an alternative an unmanned vehicle for displacing manure.

This object is obtained according to the invention by the features of the characterizing part of claim 1. Accordingly the pressure with which the manure displacing means press on the floor can be set. The second propelling unit comprises at least one freely rotatable propelling member. The propelling members are preferably designed as a wheel and/or a caterpillar track. In a preferred embodiment the rotatable propelling member consists of a castor wheel as a result of which the unmanned vehicle has an excellent manoeuvrability. Caterpillar tracks have the advantage of being less sensitive to skidding than wheels.

In accordance with another inventive feature, the unmanned vehicle is equipped with orientation means for following a path in a space, or determining the position of the vehicle in a space, such as a stable or a meadow. The orientation means comprise floor detection means for detecting apertures in the floor and/or detecting a guide means in the floor, such as the reinforcement in the concrete or an electricity conducting wire. The apertures in the floor are usually provided for removing the manure as described above. When the stable floor is made of concrete, there is usually applied a metal grid in the floor for giving it extra strength. Said grid can be detected by means of the floor detection means with the aid of e.g. an induction coil. Additional orientation means may comprise a compass and/or a gyroscope and/or a spirit level and/or a clinometer and/or an acceleration meter. These orientation means are nowadays available in a form which is suitable for being applied in electronic circuits, so that integrated orientation means can easily be composed from the various components.

Besides, the orientation means also comprise wall following means for detecting and following a wall, such as a fixed stable wall or the edge of a cubicle. These wall following means extend over at least part of the circumference of the unmanned vehicle. The wall following means may also be disposed on the manure displacing means. In a preferred embodiment, the wall following means consist of a freely rotating substantially round element, such as preferably a wheel and/or a disc and/or a sphere.

According to another inventive feature, the unmanned vehicle is equipped with protective facilities for protecting the vehicle against obstacles, such as cows' legs, or fixed objects, such as supporting pillars in the stable. The protective facilities may comprise a bumper and/or a sensor for detecting cows. The protective facilities may also comprise wall following means. The protective facilities may also comprise positioning means for determining the position of an obstacle relative to the unmanned vehicle. The positioning means may also comprise a clinometer and/or an acceleration meter. The positioning means are preferably disposed on the wall following means. In this manner it is possible to determine the angular deflection and angular acceleration of e.g. the wall following means, so that information is obtained regarding the position of the obstacle. The signal from the positioning means is used for actuating the steering unit.

The manure displacing means preferably comprise at least one brush and/or at least one manure slide and/or at least one spraying unit.

In accordance with a last inventive feature, the unmanned vehicle is equipped with anti-bumping means for preventing the manure displacing means from moving too far away from the floor. The anti-bumping means comprise a bumper and/or a bracket. The anti-bumping means preferably comprise an anti-bumping sensor for detecting the movement of the manure displacing means away from the floor, which anti-bumping sensor is coupled to the propelling unit. Such an anti-bumping sensor may consist of a switch which is disposed on the bumper or bracket. When the manure slide moves too far away from the stable floor, the switch touches the stable floor, whereupon the unmanned vehicle is caused to run in an opposite direction and bears again with all its supporting means on the stable floor.

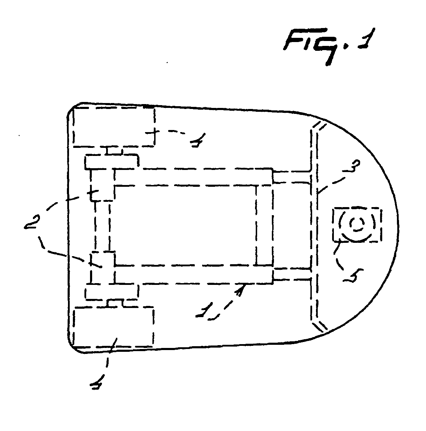

The invention will now be explained in further detail with reference to the accompanying drawing, in which
Figure 1 is a plan view of the unmanned vehicle.

The unmanned vehicle as shown in Figure 1 consists of a frame 1 to which there are fitted a castor wheel 5, the propelling unit 2 and the manure slide 3. The steering unit is constituted by the propelling unit 2, which propelling unit 2 comprises two independently driven wheels 4. In this embodiment manoeuvring the vehicle is possible by varying the drive torque or the peripheral velocity of the wheels 4. The wheels 4 may comprise a wheel and/or a caterpillar track.

## Claims

1. An unmanned vehicle for displacing manure over a stable floor, comprising a steering unit for steering the vehicle and a frame (1) with first, second and third supporting means for supporting the frame (1) on the floor, while the first and second supporting means are rollable relative to the floor and the third supporting means comprise manure displacing means for displacing manure, the first supporting means comprising a propelling unit (2) for propelling the vehicle, said propelling unit comprising two independently drivable propelling members and the steering unit is constituted by the propelling unit, **characterized in that** at least one of the supporting means is provided with pressure setting means for setting the pressure with which the manure displacing means press on the floor.

2. An unmanned vehicle as claimed in claim 1, **characterized in that** the second supporting means comprise at least one freely rotatable propelling member.

3. An unmanned vehicle as claimed in claim 1 or 2, **characterized in that** the propelling member comprises a wheel (4) and/or a caterpillar track.

4. An unmanned vehicle as claimed in any one of the preceding claims, **characterized in that** the third supporting means are disposed between the first and the second supporting means.

5. An unmanned vehicle as claimed in any one of the preceding claims, **characterized in that** the unmanned vehicle is equipped with orientation means for following a path in a space or determining the position of the vehicle in a space, such as a stable or a meadow.

6. An unmanned vehicle as claimed in any one of the preceding claims, **characterized in that** the unmanned vehicle is equipped with protective facilities for protecting the vehicle against obstacles, such as a cow's leg.

7. An unmanned vehicle as claimed in claim 6, **characterized in that** the protective means are provided equipped with positioning means for determining the position of an obstacle relative to the unmanned vehicle.

8. An unmanned vehicle as claimed in claim 7, **characterized in that** the signal from the positioning means is used for actuating the steering unit.

9. An unmanned vehicle as claimed in any one of the preceding claims, **characterized in that** the manure displacing means comprise at least one brush and/or at least one manure slide (3) and/or at least one spraying unit.

10. An unmanned vehicle as claimed in any one of the preceding claims, **characterized in that** the unmanned vehicle is equipped with anti-bumping means for preventing the manure displacing means from moving too far away from the floor.

## Patentansprüche

1. Unbemanntes Fahrzeug zum Verlagern von Mist auf einem Stallboden mit einer Lenkvorrichtung zum Lenken des Fahrzeuges und einem Rahmen (1) mit einer ersten, zweiten und dritten Stützvorrichtung zum Abstützen des Rahmens (1) auf dem Boden, wobei die erste und die zweite Stützvorrichtung auf dem Boden abrollbar sind und die dritte Stützvorrichtung eine Mistverlagerungsvorrichtung zum Verlagern von Mist umfaßt, wobei die erste Stützvorrichtung eine Antriebseinheit (2) zum Antreiben des Fahrzeuges umfaßt, wobei die Antriebseinheit zwei unabhängig antreibbare Antriebsglieder umfaßt und die Lenkvorrichtung durch die Antriebseinheit gebildet ist,
**dadurch gekennzeichnet, daß** mindestens eine der Stützvorrichtungen mit einer Druckeinstellvorrichtung zum Einstellen des Druckes versehen ist, mit dem die Mistverlagerungsvorrichtung gegen den Boden gedrückt wird.

2. Unbemanntes Fahrzeug nach Anspruch 1,
**dadurch gekennzeichnet, daß** die zweite Stützvorrichtung mindestens ein frei drehbares Antriebsglied umfaßt.

3. Unbemanntes Fahrzeug nach Anspruch 1 oder 2,
**dadurch gekennzeichnet, daß** das Antriebsglied ein Rad (4) und/oder eine Raupe umfaßt.

4. Unbemanntes Fahrzeug nach einem der vorhergehenden Ansprüche,
**dadurch gekennzeichnet, daß** die dritte Stützvorrichtung zwischen der ersten und der zweiten Stützvorrichtung angeordnet ist.

5. Unbemanntes Fahrzeug nach einem der vorhergehenden Ansprüche,
**dadurch gekennzeichnet, daß** das unbemannte Fahrzeug mit einer Orientierungsvorrichtung versehen ist, um einem Weg in einem Raum zu folgen oder die Position des Fahrzeuges in einem Raum, wie z. B. einem Stall oder einer Wiese, zu bestimmen.

6. Unbemanntes Fahrzeug nach einem der vorhergehenden Ansprüche,
**dadurch gekennzeichnet, daß** das unbemannte Fahrzeug mit Schutzvorrichtungen versehen ist, um das Fahrzeug gegen Hindernisse, wie z. B. das Bein einer Kuh, zu schützen.

7. Unbemanntes Fahrzeug nach Anspruch 6,
**dadurch gekennzeichnet, daß** die Schutzvorrichtung mit einer Positioniervorrichtung versehen ist, um die Position eines Hindernisses relativ zu dem unbemannten Fahrzeug zu bestimmen.

8. Unbemanntes Fahrzeug nach Anspruch 7,
**dadurch gekennzeichnet, daß** das Signal der Positioniervorrichtung zur Betätigung der Lenkvorrichtung verwendet wird.

9. Unbemanntes Fahrzeug nach einem der vorhergehenden Ansprüche,
**dadurch gekennzeichnet, daß** die Mistverlagerungsvorrichtung mindestens eine Bürste und/oder mindestens einen Mistschieber (3) und/oder mindestens eine Sprüheinheit umfaßt.

10. Unbemanntes Fahrzeug nach einem der vorhergehenden Ansprüche,
**dadurch gekennzeichnet, daß** das unbemannte Fahrzeug mit einer Antiprellvorrichtung versehen ist, um zu verhindern, daß sich die Mistverlagerungsvorrichtung zu weit vom Boden entfernt.

## Revendications

1. Véhicule téléguidé pour déplacer du fumier sur le sol d'une étable, comprenant une unité de guidage pour guider le véhicule et une armature (1) avec un premier, un deuxième et un troisième moyens de support pour soutenir l'armature (1) sur le sol, alors que le premier et le deuxième moyens de support peuvent rouler par rapport au sol et que le troisième moyen de support comprend un moyen de déplacement du fumier pour déplacer le fumier, le premier moyen de support comprend une unité de propulsion (2) pour propulser le véhicule, ladite unité de propulsion comprenant deux éléments de propulsion pouvant être commandés de manière indépendante et l'unité de guidage est constituée par l'unité de propulsion, **caractérisé en ce que** au moins un des moyens de support est muni de moyens de réglage de la pression pour régler la pression avec laquelle le moyen de déplacement du fumier s'appuie sur le sol.

2. Véhicule téléguidé selon la revendication 1, **caractérisé en ce que** le deuxième moyen de support comprend au moins un élément de propulsion pouvant tourner librement.

3. Véhicule téléguidé selon la revendication 1 ou 2, **caractérisé en ce que** l'élément de propulsion comprend une roue (4) et / ou une chenille.

4. Véhicule téléguidé selon l'une quelconque des revendications précédentes, **caractérisé en ce que** le troisième moyen de support est disposé entre le premier et le deuxième moyen de support.

5. Véhicule téléguidé selon l'une quelconque des revendications précédentes, **caractérisé en ce que** le véhicule téléguidé est équipé d'un moyen d'orientation pour suivre un passage dans un espace ou pour déterminer la position du véhicule dans un espace, tel qu'une étable ou une prairie.

6. Véhicule téléguidé selon l'une quelconque des revendications précédentes, **caractérisé en ce que** le véhicule téléguidé est équipé de dispositifs de protection pour protéger le véhicule des obstacles, tels qu'une patte de vache.

7. Véhicule téléguidé selon la revendication 6, **caractérisé en ce que** les moyens de protection sont fournis équipés de moyens de positionnement pour déterminer la position d'un obstacle par rapport au véhicule téléguidé.

8. Véhicule téléguidé selon la revendication 7, **caractérisé en ce que** le signal provenant des moyens de positionnement est utilisé pour activer une unité de guidage.

9. Véhicule téléguidé selon l'une quelconque des revendications précédentes, **caractérisé en ce que** le moyen de déplacement du fumier comprend au moins une brosse et / ou au moins une glissière pour fumier (3) et / ou au moins une unité de pulvérisation.

10. Véhicule téléguidé selon l'une quelconque des revendications précédentes, **caractérisé en ce que** le véhicule téléguidé est équipé d'un moyen anti-collision pour empêcher le moyen de déplacement du fumier de trop s'éloigner du sol.
